# FASCICULE DE BREVET EUROPEEN

(11) **EP 2 710 703 B1**
(45) Date de publication et mention de la délivrance du brevet: **30.12.2015**
(21) Numéro de dépôt: 12731025.8
(22) Date de dépôt: 18.05.2012
(51) Int. Cl.: H02J 4/00, H02J 13/00

(54) **INSTALLATION DE COMMANDE PERMETTANT DE COMMANDER L'ALIMENTATION ÉLECTRIQUE D'UNE PLURALITÉ D'ORGANES ÉLECTRIQUES EN COURANT CONTINU**
STEUERUNGSANLAGE ZUR STEUERUNG DER STROMVERSORGUNG MEHRERER ELEKTRISCHER GLEICHSTROMSYSTEME
CONTROL INSTALLATION MAKING IT POSSIBLE TO CONTROL THE ELECTRICAL POWER SUPPLY FOR A PLURALITY OF DC ELECTRICAL UNITS

(30) Priorité: 19.05.2011 FR 1154352
(43) Date de publication de la demande: 26.03.2014
(73) Titulaire: Scheiber S.A., 85120 Saint Pierre Du Chemin (FR)
(72) Inventeur: SIAUDEAU, Jean-Paul, 44690 Monnieres (FR); PAIN, Anthony, 79320 Moncoutant (FR); SCHEIBER, Franck, 85120 Saint-Pierre-du-Chemin (FR)
(74) Mandataire: Dutreix, Hugues Ours
(86) Numéro de dépôt international: PCT/FR2012/051119
(87) Numéro de publication internationale: WO 2012/156651

(56) Documents cités:
- EP-A2- 1 885 039
- DE-U1- 20 218 249
- JP-A- 7 015 880

## Description

La présente invention concerne de manière générale les installations de commande.

L'invention concerne plus particulièrement une installation de commande permettant de commander l'alimentation électrique d'une pluralité d'organes électriques, ladite installation comprenant :
- une alimentation à courant continu, apte à alimenter une pluralité d'organes électriques,
- un système de gestion de l'alimentation desdits organes électriques, ledit système de gestion étant interposé entre lesdits organes électriques et l'alimentation à courant continu.

L'invention concerne également une structure, telle que véhicule ou maison mobile, équipée d'une telle installation de commande et un procédé de montage correspondant.

Les véhicules ou les habitations mobiles, encore appelées mobile-homes, comprennent généralement de nombreux équipements ou organe électriques qui sont destinés à être alimentés par une alimentation à courant continu, telle qu'une batterie.

Lesdits véhicules ou les mobile-homes comportent également une installation de commande de ces organes électriques qui comprend une pluralité d'actionneurs permettant de gérer chacun l'alimentation d'un desdits organes électriques en commandant l'ouverture ou la fermeture de la liaison électrique entre ledit organe électrique et la batterie. Les installations de commande connues de ces véhicules ou de ces mobile-homes présentent un nombre important de câbles qui relient les actionneurs aux organes électriques à commander.

Il est alors nécessaire de ménager dans la structure du véhicule ou de l'habitation mobile, de nombreux passages de câbles. La réalisation de nombreux passages de câbles est fastidieuse et peut nécessiter de percer une partie de la structure, ce qui fragilise ladite structure et augmente le risque d'infiltration d'eau. En particulier dans les mobile-homes, il est nécessaire de renforcer les cloisons ou parois du mobile-home dans lesquelles les actionneurs sont destinés à être installés pour tenir compte des passages de câbles ménagés dans lesdites cloisons ou parois et qui risquent de les fragiliser.

Enfin, les véhicules ou mobile-homes sont des structures généralement étroites à l'intérieur desquelles l'espace de travail est réduit, ce qui complique l'intervention des opérateurs pour ménager les passages de câbles et passer lesdits câbles entre les actionneurs et les organes électriques à commander. En outre, en cas de réagencement et/ou d'ajout d'organes électriques, il peut être nécessaire de modifier le câblage initial.

On connait aussi du document DE20218249 une installation de commande sans fil permettant de commander des sorties de puissance d'équipement électriques. Cependant, cette installation ne permet pas de répondre à l'objectif de réduction de dépenses énergétique puisque l'actionneur du dispositif de commande émetteur de cette installation nécessite une pile pour fonctionner. En outre, cette installation de commande n'est pas adaptée pour une alimentation d'organe électrique en continu. En effet avec une telle installation, les organes électriques sont alimentés en courant alternatif par le secteur, ce qui rend l'installation inutilisable pour la commande d'organes électriques à alimentation continue en particulier dans le cas de véhicules. On notera aussi que l'alimentation par le secteur (c'est-à-dire en courant alternatif) des organes électriques nécessite que l'installation soit équipée d'un système de protection électrique de type fusible compatible avec les caractéristiques du courant du secteur. Or, un tel système de protection électrique de type fusible compatible avec les caractéristiques du courant du secteur est, encombrant, onéreux et d'intelligence limitée.

La présente invention a pour but de proposer une installation permettant de résoudre les problèmes qui se posent avec les solutions de l'état de la technique exposées ci-dessus.

La présente invention a pour but de proposer une installation de commande pour une structure équipée d'organes électriques à commander, destinés à être alimentés par une alimentation à courant continu. En particulier, la conception de l'installation doit permettre de réduire la consommation d'énergie de ladite installation et limiter, voire supprimer les passages de câbles entre les actionneurs et les organes électriques à commander.

A cet effet, l'invention a pour objet une installation de commande permettant de commander l'alimentation électrique d'une pluralité d'organes électriques, ladite installation comprenant :
- une alimentation à courant continu, telle qu'une batterie d'alimentation, apte à alimenter une pluralité d'organes électriques,
- un système de gestion de l'alimentation desdits organes électriques, ledit système de gestion étant interposé entre lesdits organes électriques et l'alimentation à courant continu,
caractérisée en ce que ladite installation comprend aussi :
- un dispositif de commande émetteur comprenant des moyens d'émission radiofréquence et des actionneurs comprenant chacun un transducteur afin d'alimenter en énergie lesdits moyens d'émission radiofréquence pour commander l'émission d'un signal radiofréquence,
- un dispositif de commande récepteur comprenant des moyens de réception radiofréquence, aptes à recevoir les signaux radiofréquence émis par le dispositif de commande émetteur, et à transmettre au système de gestion, des signaux de commande, fonctions du ou des signaux radiofréquence reçus, pour activer ou désactiver l'alimentation d'au moins une partie desdits organes électriques.

Pour rappel, un transducteur est un dispositif qui transforme une première forme d'énergie extérieure qu'il reçoit en une autre deuxième forme d'énergie qu'il génère à partir de la première forme d'énergie. Ledit transducteur a pour fonction de transformer en temps réel la première forme d'énergie qu'il reçoit en cette deuxième forme d'énergie. Ladite première forme d'énergie est une énergie extérieure au transducteur qui n'est pas stockée à la différence d'une pile. A titre d'exemple et comme détaillé ci-après, cette première forme d'énergie peut être un effort mécanique appliqué au transducteur ou une énergie de type renouvelable et non stockée, telle que l'énergie solaire ou éolienne.

L'utilisation d'un dispositif de commande émetteur comprenant un actionneur formé d'un transducteur, par exemple un transducteur électromécanique, permet au dispositif de commande émetteur de fonctionner sans aucune source d'alimentation électrique autre que celle résultant de la sollicitation du transducteur, puisque, dans le cas d'un transducteur électromécanique, c'est l'effort de pression sur l'actionneur qui est transformé par le transducteur en énergie électrique pour alimenter les moyens d'émission de signaux radio. En outre, l'utilisation de moyens d'émission radio pour transmettre un signal de commande permet encore de simplifier la mise en place du dispositif de commande récepteur et du dispositif de commande émetteur. En effet, aucun fil de liaison n'est nécessaire pour la communication entre le dispositif de commande émetteur et celui récepteur. Le dispositif de commande émetteur et celui récepteur peuvent ainsi être positionnés librement l'un par rapport à l'autre, tout en respectant la distance maximale de transmission.

L'application d'une telle solution à des véhicules ou habitations mobiles destinés à être alimentés en courant continu, permet de réduire la consommation d'énergie de l'installation de commande et offre un maximum de flexibilité dans l'agencement des organes électriques et des actionneurs correspondants, puisque, en cas de réagencement ou de modification des organes électriques, les besoins de recâblage sont réduits voire inexistants. Une telle solution autonome en énergie et sans fil permet une mise en place simple et rapide de l'installation de commande dans la structure à équiper, sans endommager ladite structure à équiper.

Ainsi, en particulier dans le cas d'un bateau, une telle installation permet de s'exempter, ou de limiter le nombre, des passages de câbles entre les actionneurs et les organes électriques, ce qui limite les risques d'infiltration et de pourrissement à travers l'installation de communication.

En outre, comme détaillé ci-après, en cas d'installation de commande filaire déjà présente, la solution permet d'obtenir une double commande filaire et radio.

Selon une caractéristique avantageuse de l'invention, ledit transducteur est apte à transformer un effort d'appui exercé sur ledit actionneur en un courant électrique pour alimenter en énergie lesdits moyens d'émission radiofréquence.

Selon une autre caractéristique avantageuse de l'invention, ledit transducteur est apte à transformer une source d'énergie renouvelable, telle que de l'énergie solaire, ou de l'énergie éolienne, ou une différence de température, en un courant électrique pour alimenter en énergie lesdits moyens d'émission radiofréquence. Dans le cas où ledit transducteur est apte à transformer une différence de température en un courant électrique, ledit transducteur est usuellement appelé thermocouple.

Selon une autre caractéristique avantageuse de l'invention, ledit système de gestion comprend des relais présentant chacun un pôle, ou broche, apte à être relié à l'un desdits organes électriques et un autre pôle, ou broche, apte à être relié à l'alimentation à courant continu.

Lorsque ledit relais est un transistor à effet de champ, lesdits pôles, ou broches, du transistor reliés l'un à l'organe électrique, l'autre à l'alimentation continue sont le drain et la source. L'entrée de commande du transistor à effet de champ est formée par sa broche appelée grille.

Selon un premier mode de réalisation de l'invention, le dispositif de commande récepteur comprenant plusieurs sorties, l'entrée de commande de chaque relais est reliée à l'une des sorties du dispositif de commande récepteur pour permettre au dispositif de commande récepteur de commander ledit relais en fonction du ou des signaux radiofréquence reçus.

Préférentiellement, l'installation comprend également des moyens de récupération d'informations d'état des organes électriques et de transmission desdites informations d'état à des moyens de signalisation, tels qu'un écran d'affichage.

Avantageusement, ladite installation comprend en outre un dispositif de commande filaire comprenant une pluralité d'actionneurs pour transmettre, directement ou indirectement, des signaux de commande au système de gestion d'alimentation desdits organes électriques.

L'ajout d'un dispositif de commande filaire permet de bénéficier d'une double commande filaire et radio pour le pilotage de l'alimentation des organes électriques.

Selon un deuxième mode de réalisation, on peut prévoir que l'installation comprenne un calculateur, dit calculateur d'entrée, raccordé à une entrée dudit dispositif de commande récepteur, ledit dispositif de commande filaire est raccordé audit calculateur par un bus de réseau,
ledit calculateur d'entrée comprenant :
- des moyens d'analyse des signaux de commande destinés à être transmis par ledit dispositif de commande filaire audit calculateur, et
- des moyens de transmission pour transmettre, au dispositif de commande récepteur, des signaux correspondant auxdits signaux transmis par le dispositif de commande filaire, dans un format adapté audit dispositif de commande récepteur.

Préférentiellement, ledit calculateur d'entrée forme lesdits moyens de récupération et de transmission d'informations d'état des organes électriques.

Selon un troisième mode de réalisation de l'invention, l'installation comprend aussi un premier calculateur connecté au dispositif de commande récepteur pour récupérer des signaux dudit dispositif de commande récepteur générés à partir des signaux reçus par ledit dispositif de commande récepteur,
et ledit système de gestion comprend des relais présentant chacun un pôle, ou broche, apte à être relié à l'un desdits organes électriques et un autre pôle, ou broche, apte à être relié à l'alimentation à courant continu,
et au moins un bloc de commande qui inclue lesdits ou une partie desdits relais et un deuxième calculateur agencé pour piloter l'entrée de commande de chacun des relais dudit bloc de commande,
ledit ou chaque bloc de commande et le premier calculateur étant aptes à communiquer entre eux par un réseau sur lequel ledit premier calculateur est apte à transmettre des signaux comprenant des informations de commande générées à partir des signaux récupérés dudit dispositif de commande récepteur,
ledit deuxième calculateur du ou de chaque bloc de commande étant configuré pour piloter les relais dudit bloc de commande en fonction des informations de commande transmises sur ledit réseau.

La présence du calculateur connecté au dispositif de commande récepteur et monté en réseau avec au moins un bloc de commande permet de commander via le réseau ainsi créé, de manière simple et fiable, des organes électriques déportés par rapport au dispositif de commande récepteur.

En outre, grâce à la présence d'un calculateur en sortie du dispositif de commande récepteur et à la conception d'un réseau multiplexé entre ledit calculateur et le système de gestion d'alimentation des sorties de puissance associées aux organes électriques, il est possible d'utiliser ledit calculateur pour transmettre au système de gestion un signal de commande d'activation ou de désactivation d'un ou plusieurs organes électriques sur la base d'une combinaison de signaux reçus par le dispositif de commande récepteur. Il est ainsi possible de définir une combinaison de signaux résultant de la sollicitation d'une pluralité d'actionneurs, simultanément ou dans un ordre donné, et de configurer le calculateur de manière à affecter à cette combinaison un signal de commande particulier.

Ledit système de gestion est apte à commander lesdites sorties de puissance, indépendamment les unes des autres ou simultanément, en fonction du ou des signaux transmis sur le réseau par le ou les dispositifs de commande.

Ledit ou chaque bloc de commande est interposé, d'une part, entre lesdits organes électriques et ledit ou les dispositifs de commande, et, d'autre part, entre les organes électriques et l'alimentation à courant continu. Lesdites informations de commande qui transitent sur le réseau comprennent des informations issues du traitement par ledit premier calculateur de signaux de sortie dudit dispositif de commande récepteur. Ces informations sont transmises par ledit premier calculateur sur ledit réseau dans un format adapté pour être compris par le ou chaque bloc de commande.

Ledit premier calculateur peut ainsi traduire les signaux de commande qu'il reçoit et les transformer en données sur le bus de réseau. L'utilisation d'un tel réseau permet de bénéficier d'un nombre important de sorties de puissance, ce qui offre la possibilité de piloter aisément et de manière fiable un grand nombre d'organes électriques. En effet, grâce à l'utilisation d'un réseau multiplexé entre les organes d'éclairage et le ou chaque dispositif de commande, l'appui sur l'un des actionneurs du dispositif de commande peut mettre en fonction ou arrêter n'importe quelle sortie de puissance d'un bloc de commande du réseau. L'affectation des actionneurs aux organes électriques à commander peut s'effectuer de manière aisée par un logiciel de paramétrage du réseau, par exemple via un ordinateur.

Avantageusement, ledit premier calculateur et ledit dispositif de commande récepteur sont logés dans un même boitier.

Selon un quatrième mode de réalisation de l'invention, ledit premier calculateur comprend aussi une pluralité de sorties auxquelles sont raccordées les entrées de commande d'une partie desdits relais. Lesdits relais peuvent ainsi être pilotés directement par ledit calculateur, c'est-à-dire pour activer ou non l'alimentation par la source d'alimentation continue des organes électriques raccordés aux relais.

Avantageusement, dans le cadre de ce troisième mode de réalisation, ledit premier calculateur et ledit dispositif de commande récepteur sont logés dans un même boitier muni de moyens de connexion aux organes électriques à piloter, de moyens de connexion à l'alimentation en continu et de moyens de connexion audit réseau.

Selon une caractéristique avantageuse de l'invention, lesdits relais sont des transistors à effet de champs. De préférence, chaque relais est muni de moyens de détermination de l'intensité qui traverse ledit relais, et ledit dispositif de commande récepteur ou le calculateur qui pilote ledit relais est apte à piloter ledit relais en fonction de l'intensité déterminée. Avantageusement, ladite installation comprend des moyens de détermination, à partir de ladite intensité déterminée, de l'état de l'organe électrique raccordé audit relais et des moyens de signalisation dudit état.

Le fait que les organes électriques à commander soient alimentables en courant continu, en particulier en basse tension ou très basse tension, c'est-à-dire de préférence 12V ou 24V, permet d'utiliser des relais statiques comprenant des transistors à effet de champ qui offrent des fonctionnalités de protection fiable et peu couteuse. En outre, comme exposé ci-après, de tels transistors à effet de champ offrent la possibilité de déterminer le courant qui les traverse et de les piloter en fonction de ce courant pour non seulement protéger le circuit d'alimentation et l'organe électrique correspondant mais également pour remonter des informations liées à ce courant, ce qui permet de réaliser une fonction de diagnostic de l'organe électrique commandé par le transistor à effet de champ correspondant.

Selon une caractéristique avantageuse de l'invention, l'installation comprend des moyens de calibrage permettant de régler pour chaque relais une valeur d'intensité au-delà de laquelle ledit relais empêche l'alimentation de l'organe électrique correspondant par l'alimentation à courant continu.

Selon une caractéristique avantageuse de l'invention, il est prévu un fusible interposé entre l'alimentation à courant continu et le système de gestion d'alimentation.

Selon une caractéristique avantageuse de l'invention, le dispositif de commande émetteur comprend un boîtier étanche à l'eau.

Les moyens d'émission et les actionneurs sont logés dans ledit boîtier. Bien entendu, le boîtier est configuré pour permettre à l'utilisateur d'exercer un effort d'appui sur lesdits actionneurs.

L'invention concerne également une structure, telle que véhicule ou maison mobile, comprenant une pluralité d'organes électriques et une installation de commande desdits organes électriques telle que décrite ci-dessus.

L'invention concerne également un procédé de montage d'une installation de commande d'organes électriques dans une structure, telle que véhicule ou maison mobile, équipée d'une alimentation à courant continu, telle qu'une batterie d'origine et d'organes électriques destinés à être alimentés par l'alimentation à courant continu, caractérisé en ce qu'on intègre le dispositif de commande récepteur et le système de gestion dans ladite structure en interposant ledit système de gestion entre lesdits organes électriques et ladite alimentation à courant continu d'origine qui forme ladite alimentation à courant continu de l'installation.

L'invention sera bien comprise à la lecture de la description suivante d'exemples de réalisation, en référence aux dessins annexés dans lesquels :
- la figure 1 est une vue schématique de l'installation de communication selon un premier mode de réalisation de l'invention;
- la figure 2 est une vue schématique de l'installation de communication selon un deuxième mode de réalisation de l'invention ;
- la figure 3 est une vue schématique de l'installation de communication selon un troisième mode de réalisation de l'invention ;
- la figure 4 est une vue schématique de l'installation de communication selon un quatrième mode de réalisation de l'invention ;
- la figure 5 est une vue schématique d'un mode de réalisation d'un relais permettant d'alimenter un organe électrique tout en déterminant l'intensité qui traverse ledit relais.

En référence aux figures et comme rappelé ci-dessus, l'invention concerne une installation de commande permettant de commander l'alimentation électrique d'une pluralité d'organes électriques 3.

Lesdits organes électriques 3 sont des organes dont le fonctionnement nécessite une alimentation électrique, tels que des éclairages à LED, des feux de navigation, une pompe ou tout autre organe de charge qui consomme de la puissance électrique lorsqu'il est relié à une alimentation électrique 4 adaptée, ici une alimentation à courant continu.

Ladite installation comprend une alimentation 4 à courant continu. Dans l'exemple illustré aux figures, cette alimentation à courant continu est une batterie d'alimentation. Ladite alimentation à courant continu peut également être une alimentation AC/DC. Autrement dit, l'installation fonctionne en courant continu, ledit courant continu pouvant provenir d'une batterie ou d'une alimentation AC/DC. Ainsi la description réalisée ci-dessous pour une batterie s'applique également à une alimentation AC/DC.

Ladite batterie est de préférence destinée à délivrer un courant de tension, appelée basse tension ou encore très basse tension, compris entre +/- 12V et+/- 48V, avantageusement, +/- 12V, +/- 24V ou +/- 48V. Ledit courant est apte à alimenter une pluralité de sorties de puissance 53, formées par un faisceau de câbles, destinées à alimenter lesdits organes électriques 3. Bien entendu, ladite batterie peut elle-même être branchée, via un transformateur, sur le secteur électrique, c'est-à-dire sur le réseau d'énergie électrique qui délivre un courant de tension alternative.

Avantageusement, ladite installation de commande peut être mise en place dans des structures, telles que des véhicules (voiture, bateau, ou camping car) ou des maisons mobiles, qui comprennent un système embarqué formé de plusieurs organes électriques fonctionnant avec une alimentation à courant continu, de préférence en basse tension.

L'installation comprend également un système de gestion 5 de l'alimentation desdits organes électriques 3. En particulier, comme détaillé ci-après, ledit système permet de gérer le passage de courant entre la batterie 4 et chaque sortie de puissance 53 destinée à être reliée à un organe électrique 3.

Autrement dit, ledit système de gestion 5 permet d'ouvrir ou de fermer la liaison électrique entre la batterie 4 et chaque sortie de puissance 53, et donc l'organe électrique 3 correspondant, indépendamment des autres organes électriques.

A cet effet, ledit système de gestion 5 est interposé entre, d'une part, les organes électriques 3 et la batterie 4, et, d'autre part, entre les organes électriques 3 et le ou les dispositifs de commande 2, 6. Comme détaillé ci-après, le fait que les organes électriques soient alimentés en courant continu et non en courant alternatif permet de concevoir un système de gestion 5 d'alimentation peu encombrant et très fiable, qui permet en outre de réduire la section des fils des sorties de puissance 53 et ainsi de limiter le poids et le coût de l'installation. Ceci est particulièrement avantageux dans le cas d'un véhicule tel qu'un bateau, où l'espace est réduit et où le poids influe sur la consommation d'énergie.

Comme détaillé ci-après, on peut prévoir que ledit système de gestion 5 soit également équipé d'un système 7 permettant de commander simultanément l'ouverture ou la fermeture de la liaison électrique entre la batterie 4 et l'ensemble des organes électriques 3, ou entre la batterie 4 et un groupe d'organes électriques 3.

Ledit système de gestion 5 est apte à être commandé par un ensemble de commande radio qui comprend un dispositif de commande émetteur 1 et un dispositif de commande récepteur 2.

Le dispositif de commande émetteur 1 comprend des moyens d'émission 10 radiofréquence et des actionneurs 11 de type touche. Chaque actionneur 11 comprend un transducteur. Dans l'exemple illustré aux figures, ledit transducteur est un transducteur électromécanique permettant, à l'état actionné, par exemple par exercice d'un effort de pression sur ledit actionneur, selon au moins une direction, de générer, par exemple par effet piézo-électrique ou par induction, un courant électrique permettant d'alimenter en énergie électrique lesdits moyens d'émission 10 pour commander l'émission par lesdits moyens d'émission 10 d'un signal radiofréquence.

On peut également prévoir que le transducteur soit configuré pour permettre de transformer une source d'énergie renouvelable, telle que de l'énergie solaire, ou de l'énergie éolienne, ou une différence de température, en un courant électrique permettant d'alimenter en énergie électrique lesdits moyens d'émission radiofréquence.

Ledit signal radiofréquence émis suite à la sollicitation dudit actionneur est associé audit actionneur et donc à l'organe électrique qui est destiné à être commandé par ledit actionneur. Autrement dit, ledit signal radiofréquence transporte une information signifiant que l'on a appuyé sur l'actionneur correspondant du dispositif de commande émetteur, ce qui permet au dispositif de commande récepteur 2, comme détaillé ci-après, de déterminer la sortie de puissance 53 à commander, ladite sortie de puissance 53 étant associée à l'un des organes électriques 3.

Avantageusement, lesdits signaux radiofréquence sont des signaux codés, par exemple sur 32bits, et le dispositif de commande récepteur 2 comprend des instructions permettant de décoder lesdits signaux et d'identifier ainsi la sortie à piloter.

Les signaux radiofréquence associés aux différents actionneurs 11 du dispositif de commande émetteur 1 sont de préférence distincts les uns des autres de manière à permettre d'associer une information spécifique à chaque signal radiofréquence. Par distinct, on entend que les signaux peuvent être différenciés par le dispositif de commande récepteur 2 de telle sorte que le dispositif de commande récepteur 2 puisse être configuré pour, en fonction de chaque signal reçu, transmettre au système de gestion 5, un signal de commande adapté à l'organe électrique 3 qui est associé audit signal reçu.

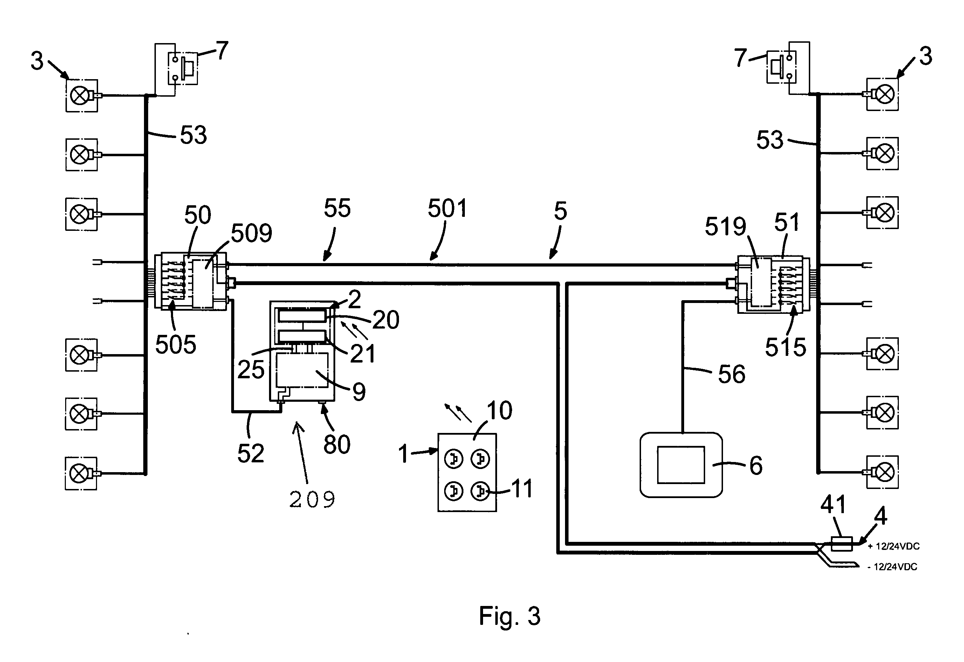

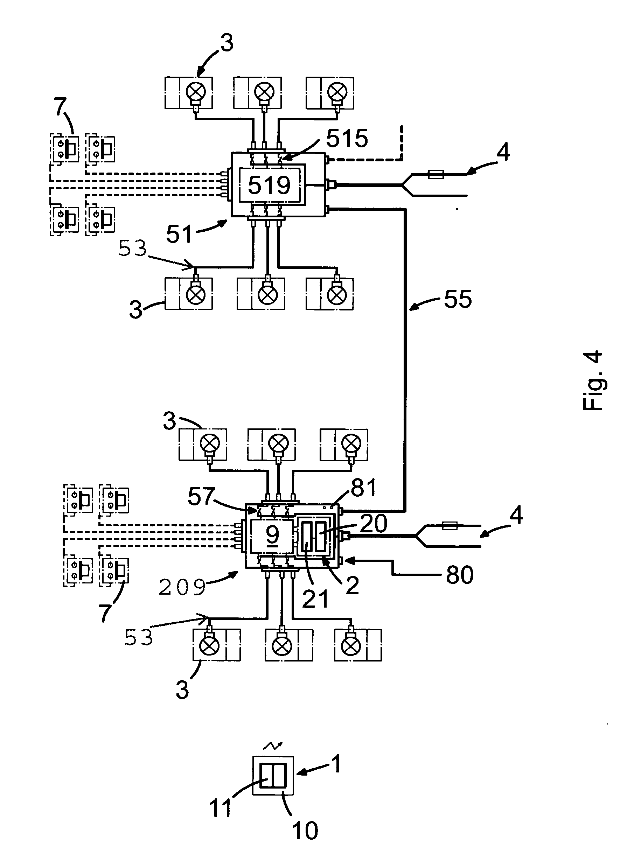

Préférentiellement, l'activation et la désactivation de l'alimentation d'un organe électrique 3 donné sont commandées par un même actionneur 11, c'est-à-dire par un même signal. L'activation ou la désactivation de l'alimentation résulte de l'état de désactivation ou d'activation dans lequel se trouve ledit organe électrique 3 avant la réception dudit signal. Autrement dit, le signal associé à chaque actionneur 11 est un signal de commande de changement d'état de l'organe électrique. En variante, en particulier avec un calculateur 9 situé en aval du dispositif de commande récepteur 2 comme détaillé ci-après à la figure 3 ou 4, on peut prévoir que le pilotage d'un ou de plusieurs organes électriques 3 soit réalisé sur la base d'une combinaison de signaux de commande.

La réalisation de chaque actionneur 11 sous forme d'un transducteur, appelé transducteur électromécanique, permet, par simple exercice d'une force mécanique sur l'actionneur, par exemple par appui d'un doigt sur l'actionneur, de générer un courant électrique permettant d'alimenter les moyens d'émission du dispositif de commande 1 émetteur. Lesdits moyens d'émission émettent alors un signal radio fréquence associé audit actionneur 11.

Le dispositif de commande 2 récepteur comprend des moyens de réception 20 radiofréquence, aptes à recevoir ledit signal radiofréquence émis par lesdits moyens d'émission 10, et des moyens de traitement 21 dudit signal permettant de transmettre au système de gestion 5, éventuellement via un calculateur 9 comme dans le mode de réalisation illustré à la figure 3 ou 4, un signal de commande fonction du signal radiofréquence reçu, pour activer ou désactiver l'alimentation d'au moins une partie desdits organes électriques 3.

En particulier, ledit dispositif de commande 2 récepteur comprend également des sorties 25 par lesquelles lesdits moyens de traitement 21 sont aptes à transmettre des signaux de commande des sorties de puissance 53 associées auxdits organes électriques 3.

Un tel ensemble de commande sans fil sans pile comprenant un dispositif de commande émetteur et un dispositif de commande récepteur est vendu par la société EnOcean Gmbh ou EnOcean Inc. Le dispositif de commande récepteur est usuellement désigné par la référence TCM300 et le dispositif de commande émetteur est usuellement désigné par la référence PTM200.

Avantageusement, la portée dudit dispositif de commande émetteur 1 est de l'ordre de 30 mètres en champ ouvert.

Le dispositif de commande émetteur 1 peut être positionné sur la structure à équiper à la place des interrupteurs de commande classiques reliés au réseau électrique. Ledit ou chaque dispositif de commande émetteur 1 peut être installé sans aucune connexion filaire puisque l'utilisation de transducteurs le rend autonome en énergie et la liaison radio permet de transmettre des signaux de commande sans câble.

Avec un tel ensemble de commande, chaque actionneur peut être associé à un organe électrique donné sans avoir à se soucier du câblage entre ledit actionneur et ledit organe électrique.

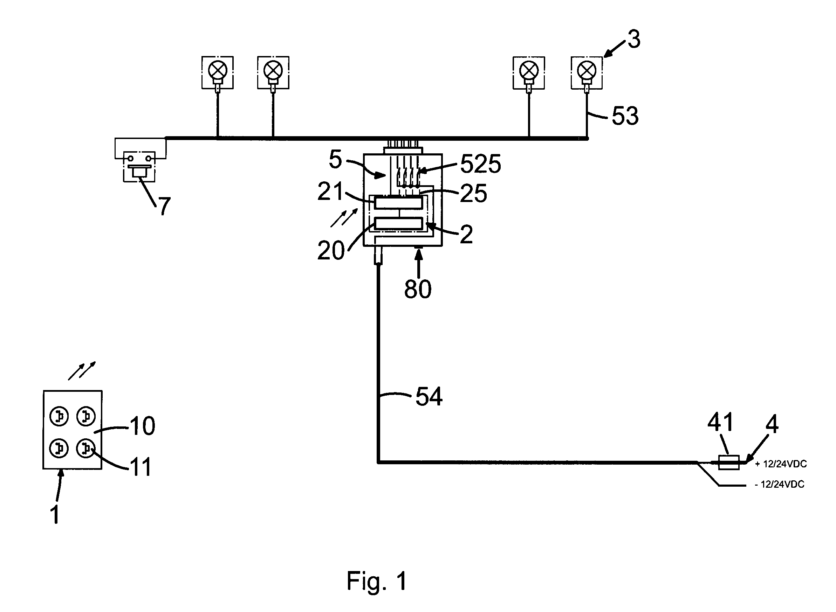

Dans l'exemple illustré à la figure 1, pour lequel le système de gestion 5 est formé de relais 525, l'entrée de commande de chaque relais 525 est reliée à une sortie 25 du dispositif de commande 2 récepteur.

Chaque relais 525 est interposé entre une sortie de puissance 53 reliée à un organe électrique 3 et la batterie 4. Autrement dit, chaque relais 525 présente un pôle, ou broche, raccordé par un faisceau d'alimentation 54 à la batterie 4 et un autre pôle, ou broche, raccordé par un faisceau de puissance à un organe électrique 3. Comme détaillé ci-après, l'entrée de commande d'un relais 525 est raccordée à l'une des sorties 25 du dispositif de commande 2 récepteur

Un fusible 41, par exemple de 40 ampères, est également présent sur le faisceau d'alimentation 54 qui s'étend entre le système de gestion 5 et la batterie 4 pour protéger ledit faisceau d'alimentation en cas de court circuit et éviter ainsi un risque d'incendie dans la structure équipée de l'installation de commande.

Concernant le dispositif de commande 2 récepteur, lesdits moyens de traitement dudit signal 21 comprennent un calculateur muni de moyens de mémorisation dans lesquels sont mémorisées des informations d'identification des signaux associés aux actionneurs 11 de l'émetteur. Chaque information d'identification est également associée à une sortie 25 du dispositif de commande 2 récepteur. Ainsi, chaque actionneur 11 de l'émetteur est associé à une sortie 25 du dispositif de commande 2 récepteur.

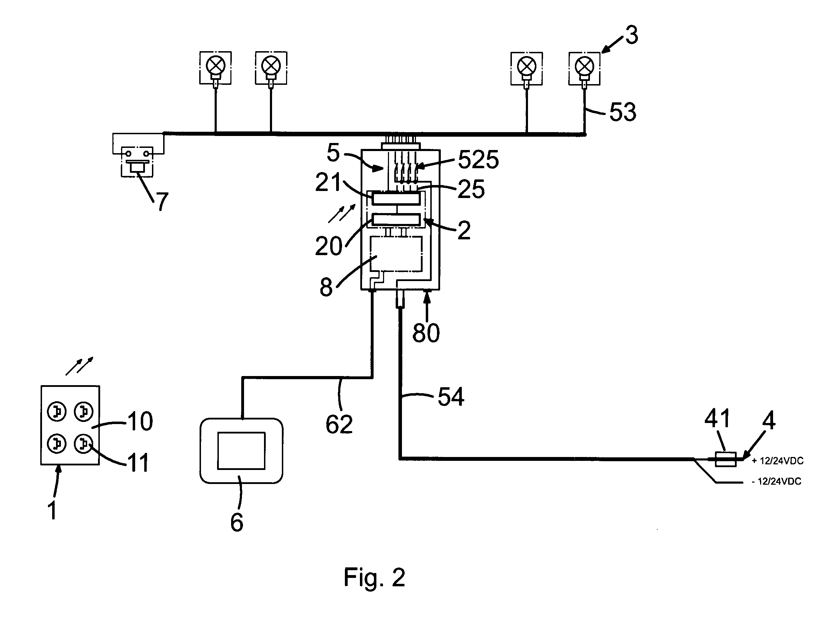

De manière générale, les moyens de traitement 21 sont configurés pour permettre d'associer chaque sortie 25 dudit dispositif de commande récepteur 2 à un signal reçu. Dans le mode de réalisation illustré à la figure 2, pour lequel l'installation comprend en outre un dispositif de commande filaire 6 raccordé au dispositif de commande récepteur 2, ledit signal reçu par ledit dispositif de commande récepteur 2 peut être un signal radiofréquence ou un signal émis de manière filaire.

Le calculateur 21 du dispositif de commande récepteur 2 permet d'identifier les signaux reçus à l'aide des informations d'identification et d'activer la ou les sorties 25 correspondantes par émission d'un signal sur cette sortie. Dans l'exemple illustré aux figures 1 et 2, l'activation d'une sortie 25 du dispositif de commande 2 récepteur permet d'activer l'entrée de commande du relais 525 correspondant du système de gestion 5 et ainsi d'activer ou de désactiver l'alimentation de la sortie de puissance 53 raccordée audit relais 525.

Comme rappelé ci-dessus, ledit système de gestion 5 est apte à commander lesdites sorties de puissance 53, indépendamment les unes des autres, en fonction du ou des signaux radiofréquence reçus par le dispositif de commande récepteur.

Quel que soit le mode de réalisation envisagé, l'installation peut également comprendre un système de commande 7 groupée comprenant un actionneur configuré pour, à l'état actionné, commander simultanément l'ouverture ou la fermeture des liaisons électriques entre plusieurs organes électriques 3, c'est-à-dire un groupe d'organes électriques, et la batterie 4 afin de permettre d'activer ou de désactiver simultanément ledit groupe d'organes électriques 3. A cet effet, comme illustré à la figure 1, ledit système de gestion 5 peut être équipé d'au moins un actionneur 7, tel qu'un bouton-poussoir, et d'un circuit électrique apte à être fermé ou ouvert par sollicitation dudit actionneur 7.

Lorsqu'un opérateur pousse l'actionneur 7, la fermeture du circuit est détectée et chaque entrée de commande de relais est activée de manière à ouvrir ou fermer simultanément la liaison électrique entre le groupe d'organes électriques 3 correspondants et la batterie 4. Dans l'exemple illustré aux figures 1 et 2, l'actionneur 7 est raccordé au dispositif de commande récepteur de sorte que c'est le dispositif de commande récepteur 2 qui détecte la fermeture du circuit par l'actionneur 7. Ledit dispositif de commande récepteur 2 peut ainsi activer chaque sortie 25 reliée à l'entrée de commande d'un relais de manière à activer ou désactiver chaque sortie de puissance 53. Dans l'exemple illustré à la figure 3, chaque bloc de commande 50, 51 est muni d'un actionneur 7 raccordé audit bloc de commande 50, 51, de sorte que ledit bloc de commande 50, 51 détecte la fermeture du circuit par l'actionneur 7 correspondant.

Ainsi, dans l'exemple illustré aux figures, l'actionneur 7 permet de commander un groupe de relais (figure 3) ou l'ensemble des relais (figures 1 et 2) pour activer ou désactiver l'alimentation électrique entre un groupe d'organes électriques 3 correspondants et la batterie 4 ou l'ensemble desdits organes électriques 3 et la batterie 4. Le ou chaque système de commande groupé 7 permet de commander directement de manière filaire l'ensemble ou un groupe d'organes électriques. On peut également prévoir un actionneur de commande directe pour chaque organe électrique 3 à commander.

Ledit dispositif de commande 2 récepteur comprend également une entrée de raccordement 80 à une console de programmation (non représentée) permettant d'appairer, c'est-à-dire de régler l'affectation, des sorties 25 dudit dispositif de commande 2 récepteur aux actionneurs 11 du dispositif de commande 1 émetteur et, le cas échéant, aux actionneurs du dispositif de commande filaire 6 détaillé ci-après. On peut également prévoir que ledit dispositif de commande 2 récepteur ou le boîtier qui intègre ledit dispositif de commande 2 récepteur comme dans l'exemple illustré à la figure 4 soit muni de boutons 81 d'appairage direct.

Selon un mode de réalisation particulier illustré à la figure 2, on peut prévoir de modifier l'installation du mode de réalisation illustré à la figure 1, en rajoutant un calculateur 8, comprenant par exemple un microprocesseur ou microcontrôleur, apte à communiquer avec les moyens de traitement 21 du dispositif de commande 2 récepteur pour récupérer les informations d'état actif ou inactif de l'alimentation des sorties de puissance 53 et donc des organes électriques 3 correspondants.

Selon ce mode de réalisation illustré à la figure 2, l'installation comporte également un dispositif de commande 6 filaire qui comprend des moyens de signalisation, de préférence par affichage, d'informations correspondant à l'état actif ou non des sorties de puissance 53, c'est-à-dire à l'état alimenté ou non des organes électriques 3. Lesdits moyens de signalisation peuvent être simplement formés par des voyants lumineux associés chacun à un organe électrique, ledit voyant étant allumé lorsque l'organe électrique auquel il est associé est activé.

Avantageusement, ledit dispositif de commande 6 filaire est raccordé au calculateur 8 lui-même raccordé au dispositif de commande 2 récepteur. Dans l'exemple illustré à la figure 2, ledit dispositif de commande 6 filaire communique par un bus de réseau 62, de préférence un bus de réseau CAN, avec le calculateur 8 dudit dispositif de commande 2 récepteur.

Le calculateur 8 communique avec le calculateur 21 du dispositif de commande 2 récepteur par une liaison filaire, de préférence une liaison série, qui peut être commune avec l'entrée du dispositif de commande 2 récepteur qui permet l'affectation, à l'aide d'une console de programmation, des sorties 25 du dispositif de commande 2 récepteur aux actionneurs 11 du dispositif de commande 1 émetteur.

Ledit dispositif de commande 6 filaire comprend des actionneurs, par exemple définis par des zones d'une interface tactile, qui sont configurés chacun pour, à l'état sollicité, transmettre par la liaison filaire 62 un signal de commande, sous forme d'une trame de données, au calculateur 8. Ledit calculateur 8 analyse ledit signal reçu par comparaison avec des informations d'identification qu'il possède en mémoire. Lesdites informations d'identification sont associées aux organes électriques 3 à commander, ou à des éléments intermédiaires tels que les sorties 25 du dispositif de commande récepteur, ou les sorties de puissance 53. En fonction du résultat de l'analyse du signal reçu, c'est-à-dire lorsque le calculateur 8 a identifié l'organe électrique 3 à commander ou un élément associé qui correspond audit signal reçu, ledit calculateur 8 transmet un signal de commande dudit organe électrique aux moyens de traitement 21 du dispositif de commande 2 récepteur dans un format adapté auxdits moyens de traitement 21 du dispositif de commande 2 récepteur. Lesdits moyens de traitement 21 activent alors la sortie 25 correspondant audit signal de commande reçu, ce qui permet au système de gestion 5 de piloter l'alimentation dudit organe électrique 3.

La présence du dispositif de commande filaire 6 permet d'obtenir une installation munie d'une double commande radio et filaire. En outre, lesdits moyens de signalisation de l'état d'alimentation des organes électriques offrent un confort et une grande sécurité pour le pilotage des organes électriques, puisque, grâce auxdits moyens de signalisation, l'opérateur dispose d'une remontée d'information concernant l'état des organes électriques même lorsque ceux-ci ne sont pas accessibles et/ou visibles par l'opérateur.

Bien entendu, lesdits moyens de signalisation de l'état actif ou inactif des organes électriques peuvent être distincts du dispositif de commande filaire 6. On remarquera que de tels moyens de signalisation de l'état actif ou inactif des organes électriques ne sont pas présents dans le mode de réalisation illustré à la figure 1, de sorte qu'un tel mode de réalisation illustré à la figure 1 s'applique préférentiellement à la commande d'organes électriques dont l'activation, ou mise en route, est visible, tels que des éclairages.

La récupération de l'état de chacun des organes électriques s'effectue par récupération de l'état actif ou non de l'alimentation de chacune des sorties de puissance 53, qui peut être déterminé soit, comme dans l'exemple illustré à la figure 2, à partir des sorties 25 du dispositif de commande récepteur suivant que le relais correspondant ferme ou non la liaison électrique entre la batterie et l'organe électrique, soit comme dans l'exemple illustré à la figure 3 ou 4, par analyse de données transmises sur le réseau par le ou chaque bloc de commande indiquant l'état actif ou inactif de l'alimentation des organes électriques correspondants.

En l'absence de telles remontées d'information, l'utilisateur ne connaitrait pas l'état d'alimentation de chacun des organes électriques, ce qui pourrait l'amener à réaliser des erreurs de manipulation, en particulier lorsqu'un même actionneur sert à commander l'état actif ou inactif dudit organe. La connaissance par l'utilisateur de l'état actif ou inactif de l'alimentation des différents organes électriques lui permet de piloter les organes électriques de manière fiable sans risque d'erreur.

Un tel retour d'information accroit la sécurité de l'installation puisque cela permet d'éviter qu'un organe électrique reste alimenté en permanence sans que l'utilisateur ne s'en aperçoive, ce qui générerait des risques de détérioration et/ou d'incendie pour la structure équipée de ladite installation.

Selon un autre mode de réalisation illustré à la figure 3, on peut prévoir de modifier l'installation du mode de réalisation illustré à la figure 1, en ajoutant un calculateur 9. A cet effet, le calculateur 9 est raccordé sur les sorties 25 du dispositif de commande 2 récepteur pour récupérer les signaux de sortie 25 dudit dispositif de commande 2. La calculateur 9 est configuré pour analyser les signaux de sortie 25 du dispositif de commande 2 récepteur et transmettre les informations transportées par lesdits signaux au système de gestion 5 des sorties de puissance 53.

Le dispositif de commande 2 récepteur et le calculateur 9 sont logés dans un même boîtier appelé bloc de réception 209.

Les fonctions associées au calculateur 9 et au calculateur 21 détaillées ci-dessus peuvent être réalisées à l'aide d'un même système électrique et/ou informatique, tel que microprocesseur ou microcontrôleur. Ces fonctions sont généralement réalisées sous forme d'instructions informatiques.

Dans le mode de réalisation illustré à la figure 3, le système de gestion 5 comprend deux blocs de commande 50, 51 incluant chacun un calculateur 509, 519 et des relais 505, 515 de commande de sorties 53 d'alimentation d'organe électrique 3. Les organes électriques 3 sont ainsi répartis en deux groupes pilotés par les blocs de commande 50, 51.

Ledit ou chaque bloc de commande 50, 51 comprend une pluralité de sorties reliées aux sorties de puissance 53 destinées à alimenter lesdits organes électriques 3. Chaque bloc de commande 50, 51 comprend également une entrée de raccordement à ladite batterie 4.

Lesdits relais 505, 515 de chaque bloc de commande 50, 51 sont interposés entre les sorties de puissance 53 associées aux organes électriques 3 correspondants et la source d'alimentation continue 4. L'entrée de commande de chacun desdits relais est pilotée par le calculateur du bloc de commande correspondant. Les relais 505, 515 permettent ainsi de piloter la fermeture ou l'ouverture de la liaison électrique entre chaque sortie de puissance 53 associée au bloc de puissance correspondant et la batterie 4.

Les blocs de commande 50, 51 sont montés en réseau 55 avec le bloc de réception 209. En particulier, chaque calculateur 9, 509, 519 est apte à communiquer sur ledit réseau 55.

Le calculateur 509, 519 du ou de chaque bloc de commande 50, 51 du système de gestion 5 est configuré pour permettre d'associer chaque sortie dudit bloc de commande 50, 51 avec un signal ou information de commande. Ce signal de commande peut être un signal transmis sur le réseau 55 par le bloc de réception 209 ou par le dispositif de commande 6 filaire raccordé audit réseau.

Le calculateur 9 est configuré pour transmettre sur le réseau 55 les informations transportées par les signaux de sortie 25 du dispositif de commande 2 récepteur, et les calculateurs 509, 519 sont configurés pour piloter les relais 505, 515 en fonction des informations de commande transmises sur le réseau. Comme détaillé ci-après, lesdits calculateurs sont aussi configurés pour émettre sur le réseau des informations représentatives de l'état de fonctionnement des organes électriques.

Le réseau 55 permet de remonter des informations d'état des organes électriques. Ainsi, lorsqu'un calculateur qui commande l'activation d'un relais, détermine que le courant consommé par l'organe électrique associé est nul, ledit calculateur peut diagnostiquer un problème concernant ledit organe électrique et remonter l'information sur le réseau pour qu'un système de récupération d'information adapté, par exemple le dispositif 6, puisse alerter l'utilisateur.

Dans ce mode de réalisation illustré à la figure 3, le bloc de commande 50 est raccordé par un bus réseau 52 au bloc de réception 209 et par un bus réseau 501 au bloc de commande 51.

Ledit calculateur 9 comprend des moyens de traitement permettant d'interpréter le signal reçu depuis une sortie 25 du dispositif de commande 2 récepteur et de transmettre une ou des informations de commande correspondantes dans une trame de données sur le réseau 55 dans un format adapté que peut analyser chaque calculateur 509, 519 de bloc commande 50, 51 connecté au réseau 55.

L'analyse des signaux reçus permet de transmettre sur ledit réseau une information de commande d'une ou de plusieurs sorties de puissance. Le calculateur 509, 519 de chaque bloc de commande 50, 51 comprend des moyens de traitement permettant d'analyser les informations des trames de données transmises sur le réseau et de commander les relais 505, 515 associés aux sorties de puissance 53 en fonction desdites informations.

Ainsi, lorsque le calculateur 9 ou un autre dispositif 6 transmet sur le réseau 55 une trame de données, ledit ou chaque bloc de commande 50, 51 analyse la trame pour, le cas échéant, en extraire une information de commande de sortie de puissance 53. Lorsque ladite information de commande désigne une sortie de puissance 53 dont il a la gestion, c'est-à-dire pour laquelle ledit bloc de commande 50, 51 présente une sortie reliée à ladite sortie de puissance 53, lesdits moyens de traitement dudit bloc de commande 50, 51 commandent le relais associé pour ouvrir ou fermer la liaison électrique correspondante entre ladite sortie de puissance 53 et la batterie 4.

De manière simplifiée, ledit calculateur 9 permet de faire transiter sur le réseau 55 des informations correspondant aux signaux reçus par le dispositif de commande 2 récepteur.

Un tel mode de réalisation pour lequel le système de gestion comprend un ou des blocs de commande de sortie en réseau avec le dispositif de commande récepteur est particulièrement avantageux dans le cadre d'une installation comprenant un nombre important d'organes électriques éloignés les uns des autres. Le réseau 55 permet de faire transiter de manière fiable l'information de commande en différents endroits éloignés de l'installation sans nécessiter de multiple dispositif de commande récepteur. En outre, le calculateur 9 raccordé en sortie du dispositif de commande 2 récepteur permet de travailler les signaux reçus par ledit dispositif de commande 2 récepteur pour générer des informations de commande plus riches.

Autrement dit, le boîtier 209 qui inclue ledit dispositif de commande 2 récepteur et le calculateur 9 forme un module maître dont les informations de commande générées à partir des signaux reçus du dispositif de commande 1 émetteur sont transmises sur le réseau 55 aux blocs de commande 50, 51 qui forment alors des modules esclaves.

Le dispositif de commande filaire 6 décrit dans le mode de réalisation illustré à la figure 2 communique ici directement avec le deuxième bloc de commande 51 par un bus de réseau 56.

Ainsi, ledit dispositif de commande 6 filaire, ledit calculateur 9 relié au dispositif de commande 2 récepteur et le ou les blocs de commande 50, 51 multiplexés forment entre eux des éléments ou noeuds d'un réseau 55 sur lequel peuvent être transmis des signaux multiplexés se présentant sous forme de trames de données comportant des informations de commande et/ou d'état des sorties de puissance 53 et donc des organes électriques 3 correspondants.

Avantageusement, ledit réseau est un réseau CAN. Le réseau CAN, pour Control Aera Network, est un système de communication interne dont le ou les bus de données, auquel sont connectés les calculateurs, permet(tent) à ceux-ci d'échanger rapidement de l'information.

La réalisation d'un réseau de communication entre le calculateur 9 associé au dispositif de commande récepteur 2 et le ou chaque bloc de commande du système de gestion 5 permet de commander aisément des organes électriques déportés et de remonter aisément des informations, en particulier des informations d'état des organes électriques, à un système d'affichage et/ou de commande déporté, tel qu'un tableau de bord, raccordable audit réseau.

Comme pour le mode de réalisation illustré à la figure 2, la présence d'un dispositif de commande filaire 6 en plus de l'ensemble de commande radio 1, 2 permet de bénéficier d'un système de double commande, l'une sans fil et sans pile et l'autre filaire, ce qui permet d'obtenir une installation de fonctionnement fiable avec un risque de panne réduit. Un tel système de double commande filaire et radio offre une grande souplesse de fonctionnement et de gestion des organes électriques.

La figure 4 illustre un mode de réalisation selon lequel le système de gestion 5 comprend, comme pour le mode de réalisation illustré à la figure 3, des relais pilotés par des calculateurs.

Dans le cas de la figure 4, le calculateur 9 du module maître 209 est configuré non seulement pour gérer la transmission des informations sur le réseau 55, mais aussi pour piloter des relais 57 de sorties d'alimentation, ou sorties de puissance, inclus dans ce module 209, en fonction des instructions reçues par le dispositif de commande récepteur 2. Ledit premier calculateur 9 comprend aussi une entrée de raccordement à l'alimentation continue 4 et chaque relais 57 comprend un pôle, ou broche, raccordé à l'alimentation continue 4 et un autre pôle, ou broche, raccordé à la sortie de puissance à commander. L'entrée de commande dudit relais est pilotée directement par ledit calculateur 9.

Ainsi, si le dispositif de commande récepteur 2 reçoit une instruction de commande d'une sortie correspondant à l'une des sorties 53 dudit module 209 pilotable directement par le calculateur 9, le calculateur 9 qui récupère les signaux en sortie 25 du dispositif de commande 2 récepteur, active directement le relais 57 correspondant pour alimenter l'organe électrique 3 associé. Le calculateur 9 est aussi configuré pour transmettre sur le réseau 55 une information indiquant que ladite sortie est activée pour permettre de remonter ladite information à un équipement de signalisation adapté tel qu'un tableau de bord. Une telle remontée d'information est détaillée ci-après.

Par comparaison au mode de réalisation illustré à la figure 3, un tel mode de réalisation du type de celui illustré à la figure 4, pour lequel le calculateur 9 du module de réception 209 est aussi configuré pour piloter des relais 57 intégrés au module 209, permet de limiter le nombre de modules ou blocs de commande de l'installation. En particulier, le fait de munir le boîtier 209 de sortie de puissance 53 permet de commander directement les organes électriques 3 présents à proximité du dispositif de commande récepteur 2 sans avoir à rajouter de bloc de commande supplémentaire en plus de ceux nécessaires pour commander, par l'intermédiaire du réseau 55, les organes électriques 3 déportés correspondants.

Avantageusement, le niveau d'intensité d'alimentation de chaque sortie 53 est réglable. A cet effet, on peut prévoir que l'installation soit munie de gradateur(s), encore appelés « dimmer », permettant d'ajuster l'intensité qui alimente les ou une partie des organes électriques. Le réglage peut s'effectuer à l'aide du boitier de commande émetteur 1 qui permet de transmettre au dispositif de commande récepteur 2, non seulement une information d'allumage ou non d'une sortie, mais également une information de niveau d'intensité d'alimentation à appliquer à l'organe 3 électrique correspondant. A titre d'exemple, on peut prévoir que l'appui sur une touche 11 génère un signal d'activation, et que plus l'appui sur la touche est long plus le niveau d'intensité demandé est haut.

Dans la suite de la description, on décrit un mode de réalisation préféré des relais qui peut être appliqué à n'importe quel mode de réalisation de l'installation détaillé ci-dessus.

Lesdits relais 525, 505, 515, 57 des différents modes de réalisation détaillés ci-dessus sont des transistors à effet de champs, encore appelés MOSFET.

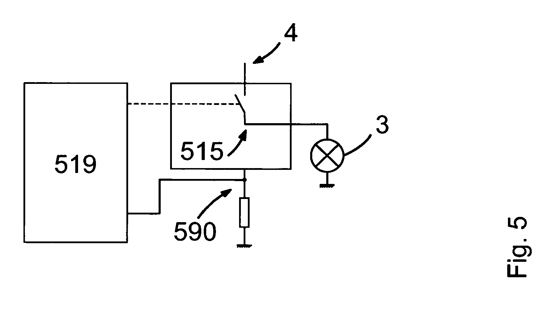

Chaque relais 525, 505, 515, 57 comprend des moyens de détermination 590 de l'intensité qui traverse ledit relais, encore appelés miroir de courant. La figure 5 illustre un tel relais muni de moyens de détermination 590 dans le contexte d'un relais 515 piloté par le calculateur 519. Bien entendu cette figure est transposable aux relais des autres modes de réalisation. Le calculateur 21, 509, 519, 9 qui pilote ledit relais 525, 505, 515, 57 est apte à piloter ledit relais en fonction de ladite mesure d'intensité.

Le calculateur 21, 509, 519, 9 qui commande un relais d'alimentation 525, 505, 515, 57 d'un organe électrique comprend avantageusement des moyens de calibrage permettant de définir pour ledit relais 525, 505, 515, 57 une valeur d'intensité qui le traverse, au-delà de laquelle ledit relais s'ouvre pour empêcher l'alimentation de l'organe électrique 3 correspondant par l'alimentation 4 à courant continu.

Ainsi, lesdits moyens de réglage ou calibrage permettent de limiter l'intensité admissible à une valeur seuil au-delà de laquelle le relais statique ouvre la liaison électrique entre ladite sortie de puissance 53 et la batterie 4 pour isoler l'organe électrique 3 correspondant de la batterie 4. Lesdits moyens de réglage ou de calibrage peuvent être réalisés sous la forme d'instructions informatiques exécutées par le calculateur 21, 509, 519, 9 qui pilote le relais 525, 505, 515, 57 correspondant.

La possibilité de mesurer l'intensité qui traverse le relais et de piloter ledit relais en conséquence offre une fonction de protection de l'organe électrique et du câble de la sortie correspondante, ce qui permet d'adapter la section dudit câble à l'intensité destinée à être consommée par l'organe électrique, et donc de limiter la section du câble qui relie l'organe électrique au relais. Une telle solution permet alors de limiter le poids et le coût de l'installation. Il est à noter que de tels transistors à effet de champ ne sont pas utilisables en courant alternatif.

En outre, le calculateur qui pilote un relais donné comprend des moyens de détermination, à partir de ladite mesure d'intensité, de l'état de l'organe électrique 3 raccordé audit relais. Le calculateur peut ensuite transmettre sur le réseau 55 (figures 3 et 4) ou par la liaison 62 (figure 2) une information d'état dudit organe électrique 3 qui est récupérable par des moyens de signalisation, tel qu'un tableau de bord.

A cet effet, ledit calculateur, par exemple le calculateur 519, récupère ladite mesure d'intensité par une entrée connectée, comme illustré à la figure 5, au niveau de la sortie 590 dudit relais, par exemple le relais 515, qui délivre ladite mesure du courant. Avantageusement, ledit calculateur compare la valeur mesurée à une valeur de référence et détermine l'état de l'organe électrique qu'il remonte sur le réseau 55 pour pouvoir informer l'utilisateur.

Lesdits moyens de détermination de courant forment ainsi des moyens de diagnostic en particulier pour détecter un organe électrique défectueux. En effet, si une consigne d'alimentation d'une sortie de puissance est émise alors que l'organe électrique correspondant est inopérant ou « grillé », le courant mesuré à travers le transistor reste nul, ce qui permet de diagnostiquer un problème au niveau dudit organe électrique. Les moyens de calibrage permettent aussi de diagnostiquer un problème de type court-circuit.

Le montage d'une installation telle que décrite ci-dessus dans une structure, telle que véhicule ou maison mobile, couramment appelée mobile home, équipée d'organes électriques 53 et d'une batterie 4 d'origine, destinée à alimenter lesdits organes électriques 3, peut s'effectuer de la manière suivante.

On entend par batterie d'origine une batterie présente dès la conception, ou sortie d'usine, de la structure. Avantageusement, au moins une partie desdits organes électriques 3 est présente d'origine.

Le dispositif de commande 2 récepteur et le système de gestion 5 des sorties de puissance 53 sont intégrés dans le véhicule en interposant ledit système de gestion 5 entre au moins une partie des organes électriques 3 et la batterie 4 d'origine qui forme l'alimentation à courant continu. Les organes électriques 3 sont reliés aux sorties de puissance 53 du système de gestion 5 et la batterie 4 est reliée à une entrée d'alimentation du système de gestion 5.

En variante, on pourrait prévoir que la batterie de l'installation de commande ne soit pas présente d'origine dans la structure.

Avantageusement, le dispositif de commande 1 émetteur est portable à la manière d'une télécommande. En variante, on peut prévoir d'intégrer le dispositif de commande émetteur au véhicule, par exemple sur un tableau de bord du véhicule.

Lesdits moyens de gestion, les moyens de traitement, le ou les calculateurs comprennent chacun un ou plusieurs systèmes électroniques et/ou informatiques permettant d'effectuer des opérations de traitement et de calcul. Chacun de ces moyens peut être réalisé sous la forme d'un circuit électronique de préférence muni d'un ou plusieurs microprocesseur(s) ou microcontrôleur. Ainsi, lorsqu'il est précisé que des moyens donnés sont configurés pour réaliser une opération donnée, cela signifie que le système électronique et/ou informatique qui forme lesdits moyens, comprend des instructions permettant de réaliser ladite opération. De manière générale, chacune des fonctions détaillées ci-dessus peut être réalisée sous forme d'instructions informatiques exécutées par un calculateur, formé par exemple d'un microprocesseur ou d'un microcontrôleur.

On peut prévoir que ladite installation comprenne des moyens de gestion de priorités comprenant des instructions permettant d'affecter des priorités aux signaux reçus par ledit dispositif de commande récepteur 2 et/ou aux signaux transmis sur le réseau 55 dans le cas des modes de réalisation illustrés aux figures 3 et 4. Selon le mode de réalisation mis en oeuvre, lesdits moyens de gestion de priorité peuvent être implémentés dans le ou chaque bloc de commande 50, 51 et/ou dans le ou les calculateurs 8, 9 ou dans un autre système apte à communiquer avec le système de gestion 5.

La présente invention n'est nullement limitée aux modes de réalisation décrits et représentés.

## Revendications

1. Installation de commande permettant de commander l'alimentation électrique d'une pluralité d'organes électriques (3), ladite installation comprenant :
- une alimentation (4) à courant continu, telle qu'une batterie d'alimentation, apte à alimenter une pluralité d'organes électriques (3),
- un système de gestion (5) de l'alimentation desdits organes électriques (3), ledit système de gestion (5) étant interposé entre lesdits organes électriques (3) et l'alimentation (4) à courant continu,
**caractérisée en ce que** ladite installation comprend aussi :
- un dispositif de commande émetteur (1) comprenant des moyens d'émission (10) radiofréquence et des actionneurs (11) comprenant chacun un transducteur afin d'alimenter en énergie lesdits moyens d'émission (10) radiofréquence pour commander l'émission d'un signal radiofréquence,
- un dispositif de commande (2) récepteur comprenant des moyens de réception (20) radiofréquence, aptes à recevoir les signaux radiofréquence émis par le dispositif de commande émetteur (1), et à transmettre (21) au système de gestion (5), des signaux de commande, fonctions du ou des signaux radiofréquence reçus, pour activer ou désactiver l'alimentation d'au moins une partie desdits organes électriques (3).

2. Installation selon la revendication 1, **caractérisée en ce que** ledit transducteur est apte à transformer un effort d'appui exercé sur ledit actionneur (11) en un courant électrique pour alimenter en énergie lesdits moyens d'émission (10) radiofréquence.

3. Installation selon la revendication 1, **caractérisée en ce que** ledit transducteur est apte à transformer une source d'énergie renouvelable, telle que de l'énergie solaire, ou de l'énergie éolienne, ou une différence de température, en un courant électrique pour alimenter en énergie lesdits moyens d'émission (10) radiofréquence.

4. Installation selon l'une des revendications précédentes, **caractérisée en ce que** ledit système de gestion (5) comprend des relais (525, 505, 515, 57) présentant chacun un pôle, ou broche, apte à être relié à l'un desdits organes électriques (3) et un autre pôle, ou broche, apte à être relié à l'alimentation (4) à courant continu.

5. Installation selon la revendication 4, **caractérisée en ce que** le dispositif de commande (2) récepteur comprenant plusieurs sorties (25), l'entrée de commande de chaque relais (525) est reliée à l'une des sorties du dispositif de commande (2) récepteur pour permettre au dispositif de commande (2) récepteur de commander ledit relais (525) en fonction du ou des signaux radiofréquence reçus.

6. Installation selon la revendication 4, **caractérisée en ce que** l'installation comprend aussi un premier calculateur (9) connecté au dispositif de commande récepteur (2) pour récupérer des signaux dudit dispositif de commande récepteur (2) générés à partir des signaux reçus par ledit dispositif de commande récepteur,
et **en ce que** ledit système de gestion (5) comprend des relais (505, 515, 57) présentant chacun un pôle, ou broche, apte à être relié à l'un desdits organes électriques (3) et un autre pôle, ou broche, apte à être relié à l'alimentation (4) à courant continu,
et au moins un bloc de commande (50, 51) qui inclue lesdits ou une partie desdits relais (505, 515, 57) et un deuxième calculateur (509, 519) agencé pour piloter l'entrée de commande de chacun des relais (505, 515) dudit bloc de commande (50, 51),
ledit ou chaque bloc de commande (50, 51) et le premier calculateur (9) étant aptes à communiquer entre eux par un réseau (55) sur lequel ledit premier calculateur (9) est apte à transmettre des signaux comprenant des informations de commande générées à partir des signaux récupérés dudit dispositif de commande récepteur (2),
ledit deuxième calculateur (509, 519) du ou de chaque bloc de commande (50, 51) étant configuré pour piloter les relais (505, 515) dudit bloc de commande (50, 51) en fonction des informations de commande transmises sur ledit réseau (55).

7. Installation selon la revendication 6, **caractérisée en ce que** ledit premier calculateur (9) comprend aussi une pluralité de sorties auxquelles sont raccordées les entrées de commande d'une partie (57) desdits relais.

8. Installation selon la revendication 7, **caractérisée en ce que** ledit premier calculateur (9) et ledit dispositif de commande récepteur (2) sont logés dans un même boitier (209) muni de moyens de connexion aux organes électriques (3) à piloter, de moyens de connexion à l'alimentation en continu (4) et de moyens de connexion audit réseau (55).

9. Installation selon l'une des revendications précédentes prise en combinaison de la revendication 4, **caractérisée en ce que** lesdits relais (525, 505, 515, 57) sont des transistors à effet de champs.

10. Installation selon la revendication 9, **caractérisée en ce que** chaque relais (525, 505, 515, 57) est muni de moyens de détermination (590) de l'intensité qui traverse ledit relais, et **en ce que** ledit dispositif de commande récepteur (2) ou le calculateur (509, 519, 9) qui pilote ledit relais (525, 505, 515, 57) est apte à piloter ledit relais en fonction de l'intensité déterminée.

11. Installation selon la revendication 10, **caractérisée en ce que** ladite installation comprend des moyens de détermination, à partir de ladite intensité déterminée, de l'état de l'organe électrique (3) raccordé audit relais et des moyens de signalisation dudit état.

12. Installation selon l'une des revendications précédentes prise en combinaison de la revendication 4, **caractérisée en ce que** l'installation comprend des moyens de calibrage permettant de régler pour chaque relais (525, 505, 515, 57) une valeur d'intensité au-delà de laquelle ledit relais empêche l'alimentation de l'organe électrique (3) correspondant par l'alimentation (4) à courant continu.

13. Installation selon l'une des revendications précédentes, **caractérisée en ce que** le dispositif de commande (1) émetteur comprend un boîtier étanche à l'eau.

14. Structure, telle que véhicule ou maison mobile, comprenant une pluralité d'organes électriques (3) et une installation de commande desdits organes électriques, **caractérisée en ce que** ladite installation de commande est conforme à l'une de revendications précédentes.

15. Procédé de montage d'une installation de commande d'organes électriques conforme à l'une des revendications 1 à 13, dans une structure, telle que véhicule ou maison mobile, équipée d'une alimentation (4) à courant continu, telle qu'une batterie (4) d'origine, et d'organes électriques (3) destinés à être alimentés par l'alimentation (4) à courant continu,
**caractérisé en ce qu'**on intègre ledit dispositif de commande (2) récepteur et ledit système de gestion (5) dans ladite structure en interposant ledit système de gestion (5) entre lesdits organes électriques (3) et ladite alimentation (4) à courant continu qui forme ladite alimentation à courant continu de l'installation.

## Patentansprüche

1. Steuerungsanlage, die erlaubt, die Stromversorgung einer Vielzahl elektrischer Organe (3) zu steuern, wobei die Anlage umfasst:
- eine Gleichstromversorgung (4) wie eine Versorgungsbatterie, die imstande ist, eine Vielzahl elektrischer Organe (3) zu versorgen,
- ein Verwaltungssystem (5) der Versorgung der elektrischen Organe (3), wobei das Verwaltungssystem (5) zwischen den elektrischen Organen (3) und der Gleichstromversorgung (4) angeordnet ist,
**dadurch gekennzeichnet, dass** die Anlage ebenfalls umfasst:
- eine Sendesteuervorrichtung (1), die Funkfrequenz-Sendemittel (10) und Aktuatoren (11) umfasst, die jeweils einen Transducer umfassen, um die Funkfrequenz-Sendemittel (10) mit Energie zu versorgen, um das Senden eines Funkfrequenzsignals zu steuern,
- eine Empfangssteuervorrichtung (2), die Funkfrequenz-Empfangsmittel (20) umfasst, die imstande sind, die von der Sendesteuervorrichtung (1) gesendeten Funkfrequenzsignale zu empfangen und an das Verwaltungssystem (5) Steuersignale zu übertragen (21), die von dem oder den empfangenen Funkfrequenzsignalen abhängen, um die Versorgung von mindestens einem Teil der elektrischen Organe (3) zu aktivieren oder zu deaktivieren.

2. Anlage nach Anspruch 1, **dadurch gekennzeichnet, dass** der Transducer imstande ist, eine auf den Aktuator (11) ausgeübte Druckkraft in einen elektrischen Strom umzuwandeln, um die Funkfrequenz-Sendemittel (10) mit Energie zu versorgen.

3. Anlage nach Anspruch 1, **dadurch gekennzeichnet, dass** der Transducer imstande ist, eine erneuerbare Energiequelle wie Sonnenenergie oder Windenergie oder einen Temperaturunterschied in einen elektrischen Strom umzuwandeln, um die Funkfrequenz-Sendemittel (10) mit Energie zu versorgen.

4. Anlage nach einem der vorangehenden Ansprüche, **dadurch gekennzeichnet, dass** das Verwaltungssystem (5) Relais (525, 505, 515, 57) umfasst, die jeweils einen Pol oder eine Klemme aufweisen, der/die imstande ist, mit einem der elektrischen Organe (3) verbunden zu sein, und einen anderen Pol oder Klemme, der/die imstande ist, mit der Gleichstromversorgung (4) verbunden zu sein.

5. Anlage nach Anspruch 4, **dadurch gekennzeichnet, dass** die Empfangs-Steuervorrichtung (2) mehrere Ausgänge (25) umfasst, wobei der Steuereingang jedes Relais (525) mit einem der Ausgänge der Empfangs-Steuervorrichtung (2) verbunden ist, um der Empfangs-Steuervorrichtung (2) zu erlauben, das Relais (525) in Abhängigkeit von dem oder den empfangenen Funkfrequenzsignalen zu steuern.

6. Anlage nach Anspruch 4, **dadurch gekennzeichnet, dass** die Anlage ebenfalls einen ersten Rechner (9) umfasst, der mit der Empfangssteuervorrichtung (2) verbunden ist, um Signale der Empfangssteuervorrichtung (2), die aus von der Empfangssteuervorrichtung empfangenen Signalen erzeugt wurden, zu restaurieren,
und dass das Verwaltungssystem (5) Relais (505, 515, 57) umfasst, die jeweils einen Pol oder eine Klemme aufweisen, der/die imstande ist, mit einem der elektrischen Organe (3) verbunden zu sein, und einen anderen Pol oder eine andere Klemme, der/die imstande ist, mit der Gleichstromversorgung (4) verbunden zu sein,
und mindestens einen Steuerblock (50, 51), der die oder einen Teil der Relais (505, 515, 57) beinhaltet und einen zweiten Rechner (509, 519), der ausgebildet ist, um den Steuereingang jedes der Relais (505, 515) des Steuerblocks (50, 51) zu steuern,
wobei der oder jeder Steuerblock (50, 51) und der erste Rechner (9) imstande sind, miteinander über ein Netz (55) zu kommunizieren, über das der erste Rechner (9) imstande ist, Signale zu übertragen, die Steuerinformationen umfassen, die aus den restaurierten Signalen der Empfangssteuervorrichtung (2) erzeugt wurden,
wobei der zweite Rechner (509, 519) des oder jedes Steuerblocks (50, 51) konfiguriert ist, um die Relais (505, 515) des Steuerblocks (50, 51) in Abhängigkeit von den über das Netz (55) übertragenen Steuerinformationen zu steuern.

7. Anlage nach Anspruch 6, **dadurch gekennzeichnet, dass** der erste Rechner (9) auch eine Vielzahl von Ausgängen umfasst, mit denen die Steuereingänge eines Teils (57) der Relais verbunden sind.

8. Anlage nach Anspruch 7, **dadurch gekennzeichnet, dass** der erste Rechner (9) und die Empfangssteuervorrichtung (2) in einem selben Gehäuse (209) untergebracht sind, das mit Anschlussmitteln an die zu steuernden elektrischen Organe (3), mit Anschlussmitteln an die Gleichstromversorgung (4) und mit Anschlussmitteln an das Netz (55) ausgestattet ist.

9. Anlage nach einem der vorangehenden Ansprüche in Kombination mit Anspruch 4, **dadurch gekennzeichnet, dass** die Relais (525, 505, 515, 57) Feldeffekttransistoren sind.

10. Anlage nach Anspruch 9, **dadurch gekennzeichnet, dass** jedes Relais (525, 505, 515, 57) mit Bestimmungsmitteln (590) der das Relais durchquerenden Stromstärke ausgestattet ist, und dass die Empfangssteuervorrichtung (2) oder der das Relais (525, 505, 515, 57) steuernde Rechner (509, 519, 9) imstande ist, das Relais in Abhängigkeit von der bestimmten Stromstärke zu steuern.

11. Anlage nach Anspruch 10, **dadurch gekennzeichnet, dass** die Anlage Bestimmungsmittel, ausgehend von der bestimmten Stromstärke, des Zustands des mit dem Relais verbundenen elektrischen Organs (3) und Signalisierungsmittel des Zustands umfasst.

12. Anlage nach einem der vorangehenden Ansprüche in Kombination mit Anspruch 4, **dadurch gekennzeichnet, dass** die Anlage Kalibrierungsmittel umfasst, die erlauben, für jedes Relais (525, 505, 515, 57) einen Stromstärkewert zu regeln, jenseits dessen das Relais die Versorgung des entsprechenden elektrischen Organs (3) durch die Gleichstromversorgung (4) verhindert.

13. Anlage nach einem der vorangehenden Ansprüche, **dadurch gekennzeichnet, dass** die Sendesteuervorrichtung (1) ein wasserdichtes Gehäuse umfasst.

14. Struktur wie Fahrzeug oder Mobilheim, die eine Vielzahl elektrischer Organe (3) und eine Steuerungsanlage der elektrischen Organe umfasst, **dadurch gekennzeichnet, dass** die Steuerungsanlage einem der vorangehenden Ansprüche entspricht.

15. Montageverfahren einer Steuerungsanlage elektrischer Organe nach einem der Ansprüche 1 bis 13 in einer Struktur wie ein Fahrzeug oder ein Mobilheim, die mit einer Gleichstromversorgung (4) wie eine Originalbatterie (4) und elektrischen Organen (3) ausgestattet ist, die bestimmt sind, durch die Gleichstromversorgung (4) versorgt zu werden,
**dadurch gekennzeichnet, dass** die Empfangs-Steuervorrichtung (2) und das Verwaltungssystem (5) in die Struktur integriert sind, wobei das Verwaltungssystem (5) zwischen den elektrischen Organen (3) und der Gleichstromversorgung (4), die die Gleichstromversorgung der Anlage bildet, angeordnet ist.

## Claims

1. A control installation making it possible to control the supply of electricity for a plurality of electric members (3), said installation comprising:
- a DC power source (4), such as a power battery, able to power a plurality of electric members (3),
- a system (5) for managing the power supply of said electric members (3), said management system (5) being inserted between said electric members (3) and the DC power source (4),
**characterized in that** said installation also comprises:
- a transmitting control device (1) comprising radiofrequency transmission means (10) and actuators (11) each comprising a transducer in order to supply energy to said radiofrequency transmission means (10) to command the transmission of a radiofrequency signal,
- a receiving control device (2) comprising radiofrequency reception means (20), able to receive radiofrequency signals emitted by the transmitting control device (1), and to send (21), to the management system (5), control signals depending on the received radiofrequency signal(s), to activate or deactivate the power supply for at least part of said electric members (3).

2. The installation according to claim 1, **characterized in that** said transducer is able to transform a bearing force exerted on said actuator (11) into an electric current to supply energy to said radiofrequency transmitting means (10).

3. The installation according to claim 1, **characterized in that** said transducer is able to transform a renewable energy source, such as solar energy, or wind energy, or a temperature difference, into an electric current to supply energy to said radiofrequency transmitting means (10).

4. The installation according to one of the preceding claims, **characterized in that** said management system (5) comprises relays (525, 505, 515, 57) each having a pole, or pin, able to be connected to one of said electric members (3) and another pole, or pin, able to be connected to the DC power source (4).

5. The installation according to claim 4, **characterized in that** the receiving control device (2) comprising several outputs (25), the control input of each relay (525) is connected to one of the outputs of the receiving control device (2) to allow the receiving control device (2) to command said relay (525) based on the received radiofrequency signal(s).

6. The installation according to claim 4, **characterized in that** the installation also comprises a first computer (9) connected to the receiving control device (2) to recover signals from said receiving control device (2) generated from signals received by said receiving control device,
and **in that** said management system (5) comprises relays (505, 515, 57) each having a pole, or pin, able to be connected to one of said electric members (3) and another pole, or pin, able to be connected to the DC power source (4),
and at least one control unit (50, 51) that includes all or part of said relays (505, 515, 57) and a second computer (509, 519) arranged to steer the control input of each of the relays (505, 515) of said control unit (50, 51),
said or each control unit (50, 51) and the first computer (9) being able to communicate with one another via a network (55) on which the first computer (9) is able to transmit signals comprising control information generated from signals recovered from said receiving control device (2),
and said second computer (509, 519) of the or each control unit (50, 51) being configured to steer the relays (505, 515) of said control unit (50, 51) based on control information sent over said network (55).

7. The installation according to claim 6, **characterized in that** said first computer (9) also comprises a plurality of outputs to which the command inputs of part (57) of said relays are connected.

8. The installation according to claim 7, **characterized in that** said first computer (9) and said receiving control device (2) are housed in a same housing (209) provided with means for connecting to the electric members (3) to be steered, means for connecting to the DC power supply (4) and means for connecting to said network (55).

9. The installation according to one of the preceding claims combined with claim 4, **characterized in that** said relays (525, 505, 515, 57) are field-effect transistors.

10. The installation according to claim 9, **characterized in that** each relay (525, 505, 515, 57) is provided with means (590) for determining the intensity that crosses through said relay, and said receiving control device (2) or the computer (509, 519, 9) that steers said relay (525, 505, 515, 57) is able to steer said relay based on the determined intensity.

11. The installation according to claim 10, **characterized in that** said installation comprises means for determining, from said determined intensity, the state of the electric member (3) connected to said relay and means for signaling said state.

12. The installation according to one of the preceding claims combined with claim 4, **characterized in that** the installation comprises calibrating means making it possible to adjust, for each relay (525, 505, 515, 57), an intensity value beyond which said relay prevents the supply of power to the corresponding electric member (3) by DC power supply (4).

13. The installation according to one of the preceding claims, **characterized in that** the transmitting control device (1) comprises a watertight housing.

14. A structure, such as a vehicle or mobile home, comprising a plurality of electric members (3) and a control installation for said electric members, **characterized in that** said control installation is according to one of the preceding claims.

15. A method for assembling a control installation for electric members according to one of claims 1 to 13, in a structure, such as a vehicle or mobile home, equipped with a DC power source (4), such as an original battery (4), and electric members (3) designed to be powered by the DC power source (4),
**characterized in that** said receiving control device (2) and said management system (5) are integrated into said structure by inserting said management system (5) between said electric members (3) and said DC power source (4), which forms said DC power source of the installation.
